# EUROPÄISCHE PATENTSCHRIFT

(11) **EP 2 755 878 B1**
(45) Veröffentlichungstag und Bekanntmachung des Hinweises auf die Patenterteilung: **29.08.2018**
(21) Anmeldenummer: 11808142.1
(22) Anmeldetag: 16.09.2011
(51) Int. Cl.: B61D 27/00

(54) **KLIMAANLAGE FÜR SCHIENENFAHRZEUGE**
AIR CONDITIONING SYSTEM FOR RAIL VEHICLES
SYSTÈME DE CLIMATISATION POUR VÉHICULES FERROVIAIRES

(43) Veröffentlichungstag der Anmeldung: 23.07.2014
(73) Patentinhaber: Faiveley Transport Leipzig GmbH & Co. KG, 04435 Schkeuditz (DE)
(72) Erfinder: BOECK, Lutz, 04435 Schkeuditz (DE); FISCHER, Kai, 04178 Leipzig (DE); KÄSTNER, Lorenz, 01445 Radebeul (DE); LEITERER, Jork, 14467 Postdam (DE); WATERLOT, Bruno, F-59200 Tourcoing (FR)
(74) Vertreter: Rothe, Silke
(86) Internationale Anmeldenummer: PCT/DE2011/001750
(87) Internationale Veröffentlichungsnummer: WO 2013/037335

(56) Entgegenhaltungen:
- EP-A1- 1 010 599
- US-A- 4 201 064
- US-A- 4 905 478
- US-A- 6 116 037

## Beschreibung

Die Erfindung betrifft eine Klimaanlage für Schienenfahrzeuge, wobei in einer auf dem Fahrzeugdach angeordneten Gerätewanne sämtliche für eine Klimatisierung des Fahrgastraumes notwendigen Bauteile, insbesondere Verdichter, Verflüssiger, Lüfter, Filter, Heizelemente, Sensorik und Steuerung baulich integriert sind und wobei diese mit einem Gehäuse umschlossene Gerätewanne in einem freien Bauraum auf dem Fahrzeugdach so angeordnet ist, dass sie einen Teil der Dachform innerhalb der Kontur des Schienenfahrzeuges ausbildet.

Zur Klimatisierung der Fahrgasträume von Fahrzeugen sind bereits zahlreiche technische Lösungen bekannt. Für Omnibusse und Schienenfahrzeuge werden derartige Klimaanlagen zunehmend auf dem Fahrzeugdach angeordnet, wobei Ausgestaltungen innerhalb der Dachkonturen angestrebt werden.

So beschreibt US 6 763 669 B1 eine kompakte und flache Klimaanlage, bei der alle wesentlichen Funktionseinheiten in einer gemeinsamen Baueinheit integriert sind. Diese Baueinheit ist modulartig aufgebaut und kann mit weiteren gleichartigen Baugruppen für unterschiedliche Leistungen modifiziert werden, so dass in Abhängigkeit der konkreten Fahrzeugkategorie unterschiedlich große Luftmengen klimatisiert werden können. Die Klimaanlage ist zur Anordnung auf dem Fahrzeugdach eines Busses konzipiert.

Im Unterschied zu einer derartigen Klimaanlage für Busse müssen bei Schienenfahrzeugen wegen der etwas anderen Einsatzbedingungen weitere Aspekte beachtet werden. So sind neben primär technischen Vorgaben zur Funktionsweise der Anlage (elektrische Strom- / Spannungsverhältnisse, angestrebte Kühl- bzw. Heizleistung, zu fördernde Luftmengen usw.) üblicherweise auch höhere Fahrgeschwindigkeiten und Fahrgastzahlen sowie eine mögliche Nutzung bei klimatisch extremen Bedingungen zu berücksichtigen.

EP 0 963 895 A2 beschreibt eine Klimaanlage für Schienenfahrzeuge, bei der auf dem Fahrzeugdach mehrere der zur Klimatisierung notwendigen Baugruppen installiert sind. Diese Baugruppen sind in einer durch ein Gehäuse umschlossenen gemeinsamen Kammer angeordnet, die allerdings eine Erhöhung der Dachform bewirkt.

Aus DE 199 13 776 A1 ist eine Klimaanlage für Schienenfahrzeuge bekannt, bei der in einer auf dem Fahrzeugdach angeordneten Gerätewanne alle zur Klimatisierung notwendigen Bauteile installiert sind, insbesondere Verdichter, Kondensatoren, Lüfter, Filter, Verdampfer und Heizelemente. Weiterhin sind der Gerätewanne Schutzgitter, Klappen und Steuereinrichtungen für die Luftführung zugeordnet. Somit wird eine kompakte Klimaanlage geschaffen, die in einem ohnehin verfügbaren freien Bauraum auf dem Fahrzeugdach so angeordnet werden kann, dass sich keine Erhöhung der Dachkonstruktion ergibt.

Eine ähnliche technische Lösung wird in DE 10 2009 056 968 B3 beschrieben, wobei auch hier alle für die Klimatisierung des Fahrgastraumes wesentlichen Baugruppen in einer Gerätewanne auf dem Dach des Schienenfahrzeuges baulich integriert sind. Diese Gerätewanne ist zusätzlich nach oben mit einem Gehäuseabschnitt derart abgedeckt, dass sie einen Teil der Dachform innerhalb der Kontur des Schienenfahrzeuges darstellt.

Die oben benannten Konstruktionen und weitere ähnliche Lösungen nach US 6 116 037 A, US 4 201 064 A und US 4 905 478 A sind grundsätzlich zur Klimatisierung von Fahrgasträumen in Schienenfahrzeugen geeignet. Allerdings können sich Probleme ergeben, sofern während der Fahrt längere Tunnelabschnitte durchfahren werden. Aufgrund der Anordnung der Luftführungskanäle sind zumindest bei beengten Tunnelkonturen eine ausreichende Zuführung von Frischluft sowie eine Abführung der Abluft ohne Rückströmung in den Frischluftzug problematisch. Deshalb sind die bekannten Klimaanlagen insbesondere für eine Nutzung bei sog. Untergrundbahnen (üblicherweise als U-Bahn oder Metro bezeichnet) nur bedingt geeignet. Außerdem ist eine Bahntauglichkeit, umhin die Eignung aller Komponenten für die erhöhten mechanischen Belastungen auf der Schiene, nicht beschrieben.

Darüber hinaus muss bei Schienenfahrzeugen der Fall einer hermetischen Abdichtung des Fahrgastraumes berücksichtigt werden. Dieser tritt zum Beispiel bei Tunnelfahrten mit höheren Geschwindigkeiten zum Schutz der Fahrgäste vor auftretenden Druckwellen ein und erfordert neben einem zeitweisen Umluftbetrieb auch größere Frischluftmengen nach dem Druckschutzfall. Diese sind für eine ausreichende Versorgung der Passagiere mit Frischluft notwendig und ermöglichen die Einhaltung des festgeschriebenen Gehalts an Kohlendioxid durch höhere Volumenströme und damit erweiterte technische Kapazitäten.

Eine aus EP 1 010 599 A1 bekannte Klimaanlage für Schienenfahrzeuge schlägt vor, dass mehrere der für eine Klimatisierung des Fahrgastraumes notwendigen Bauteile in einer wannenähnlichen Baugruppe angeordnet sind, die zwischen der Decke und dem Dach des Fahrzeugs eingebaut ist. Einige der Baugruppen sind in einem Kasten angeordnet, in dem außerdem ein separates Gehäuse vorgesehen ist, das weitere Baugruppen aufnimmt. So sind beispielsweise die Verdichter außerhalb des separaten Gehäuses angeordnet, während die Verflüssiger innerhalb des Gehäuses angeordnet sind. Diese Anordnung soll funktionelle Vorteile ergeben, sie bewirkt jedoch einen erhöhten baulichen Aufwand und beeinträchtigt die Handhabung bei Montage und Wartung.

Aufgabe der Erfindung ist es, eine technische Lösung zur Klimatisierung von Fahrgasträumen in Schienenfahrzeugen zu schaffen, bei der die Baugruppen zur Luftbehandlung und Luftverteilung so ausgestaltet sind, dass insbesondere bei einer Nutzung mit umfangreichen Tunnelfahrten eine qualitativ hochwertige Klimatisierung gewährleistet wird, wobei gleichzeitig eine gute Handhabung bei Montage und Wartung gewährleistet werden soll.

Diese Aufgabe wird gelöst, indem in der Gerätewanne eine Verdichter-Verflüssiger-Einheit und eine Luftbehandler-Einheit installiert sind, die bezogen auf die Längsrichtung des Gehäuses der Klimaanlage hintereinander liegend angeordnet sind. Dabei umfasst die für zwei separate Kältekreisläufe ausgestaltete Verdichter-Verflüssiger-Einheit zwei Verdichter, zwei Verflüssiger und zwei Verflüssigerventilatoren. Die Verflüssigerzuluft wird über Öffnungen an der Oberseite des Gehäuses von den Ventilatoren angesaugt, über die Verflüssiger geleitet und strömt als Verflüssigerabluft über Schutzgitter an den Längsseiten des Gehäuses aus. Die Luftbehandler-Einheit umfasst einen Verdampfer, einen Heizer, mindestens einen Zuluftventilator, mindestens einen Luftfilter und eine Außen-/ Umluftklappe. Die Außenluft wird über Öffnungen an den Längsseiten und im Boden des Gehäuses und die Umluft wird über mindestens eine Öffnung im Boden des Gehäuses angesaugt. Im Strömungsweg von Außenluft und Umluft ist eine Baugruppe zur Regelung des Verhältnisses von Außenluft und Umluft angeordnet. Die derart geregelte Mischluft wird vom Zuluftventilator über den Luftfilter, den Verdampfer und den Heizer angesaugt und durch eine Öffnung an der Stirnseite des Gehäuses als Zuluft in den Fahrgastraum gefördert. Vorteilhafte Ausgestaltungen sind Gegenstand von Unteransprüchen, deren technische Merkmale im Ausführungsbeispiel näher beschrieben werden.

Die Klimaanlage ist grundsätzlich zur Klimatisierung der Fahrgasträume verschiedenartiger Schienenfahrzeuge geeignet. Eine bevorzugte Anwendung sind hierbei Schienenfahrzeuge mit überwiegender Nutzung als Untergrundbahn, bei denen durch die erfindungsgemäße Anordnung und Ausgestaltung der Baugruppen zur Luftbehandlung und Luftverteilung auch bei engen Tunnelkonturen eine qualitativ hochwertige Klimatisierung gewährleistet wird. Diese funktionellen Vorteile werden durch die besonders flache Bauweise der gesamten Klimaanlage noch vergrößert.

Ein Ausführungsbeispiel der Erfindung ist in der Zeichnung dargestellt und wird nachfolgend beschrieben. Es zeigen:
- Fig. 1: den grundsätzlichen Aufbau einer erfindungsgemäßen Klimaanlage in Draufsicht
- Fig. 2: die Klimaanlage in perspektivischer Ansicht aus einem Betrachtungswinkel von schräg oben
- Fig. 3: die Klimaanlage in perspektivischer Ansicht aus einem Betrachtungswinkel von schräg unten

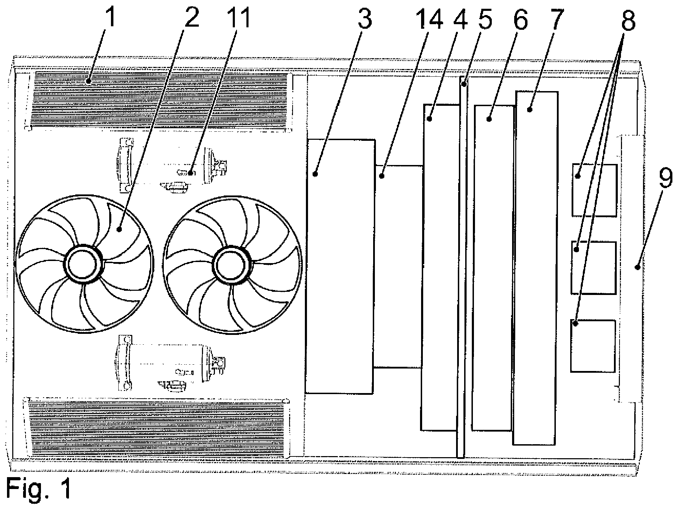

Die in der Zeichnung dargestellte Klimaanlage für Schienenfahrzeuge ist zum Heizen, Lüften und Kühlen des Fahrgastraumes geeignet. Diese Klimaanlage wird auf dem Wagendach über dem Fahrgastraum fest montiert. Fig. 1 entspricht der Blickrichtung von oben auf das Dach des Schienenfahrzeuges, wobei hier zum besseren Verständnis die oberen Gehäuseabdeckungen nicht und die jeweiligen Baugruppen lediglich stilisiert dargestellt sind.

Die Klimaanlage weist als wesentliche Baugruppen eine Verdichter-Verflüssiger-Einheit und eine Luftbehandler-Einheit auf. Der elektrische Anschluss zum zugeordneten Schienenfahrzeug erfolgt über Steckverbinder, die nach Steuerung / Regelung sowie Leistung getrennt und an der Unterseite der Klimaanlage angeordnet sind. Die Regelung erfolgt mittels Klimaregler. Ein derartiger Aufbau ist an sich bekannt, so dass auf diesbezüglich detaillierte Darlegungen verzichtet werden kann.

Wesentlich im vorliegenden Sachverhalt ist jedoch die Ausgestaltung der Verdichter-Verflüssiger-Einheit und der Luftbehandler-Einheit, die speziell für die Einsatzbedingungen von Schienenfahrzeugen bei langen Tunnelfahrten, vorzugsweise bei einer Nutzung für Untergrundbahnen - sog. U-Bahn oder Metro - konzipiert sind.

Der grundlegende Aufbau der Verdichter-Verflüssiger-Einheit ist aus Fig. 1 (links) ersichtlich. Diese Verdichter-Verflüssiger-Einheit ist für zwei separate Kältekreisläufe ausgestaltet und umfasst als wesentliche Baugruppen zwei Verdichter 11, zwei Verflüssiger 1 und zwei Verflüssigerventilatoren 2, von denen jeweils eine Baugruppe einem Kältekreislauf zugeordnet ist. Die Ventilatoren 2 sind bezogen auf die Längsrichtung des Gehäuses hintereinander auf der Mittellängsachse und die beiden Verdichter 11 und Verflüssiger 1 sind jeweils symmetrisch zur Mittellängsachse angeordnet.

Als Verdichter 11 werden vorzugsweise Scrollverdichter eingesetzt. Jeder Verdichter 11 ist elastisch abgestützt, um Schwingungen und Stoßbelastungen optimal zu absorbieren.

Außerdem ist jeder Verdichter 11 mit einer Verdichterheizung ausgestattet, um eine Diffusion von Kältemittel in das Verdichteröl zu verhindern oder nach längerer Standzeit eine solche Diffusion rückgängig zu machen.

Die Verflüssiger 1 sind Microchannel-Wärmetauscher. In den Verflüssigern 1 wird dem Kältemittel die bei der Verdichtung aufgenommen Wärme entzogen, die Verflüssigung vom dampfförmigen in den flüssigen Aggregatzustand realisiert und eine Unterkühlung herbeigeführt.

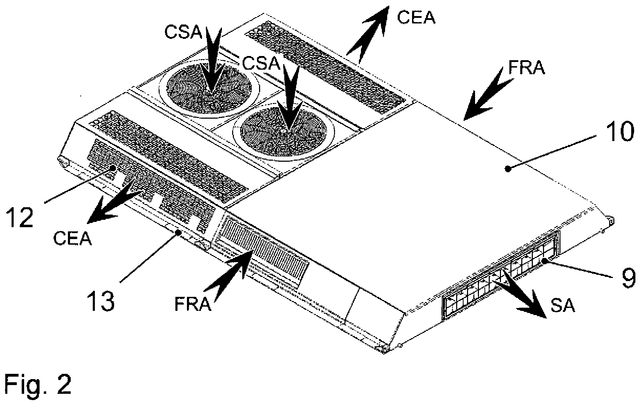

Die Ventilatoren 2 in der Verdichter-Verflüssiger-Einheit saugen die Verflüssigerzuluft CSA an, fördern diese über die Verflüssiger 1 und blasen nachfolgend die erwärmte Verflüssigerabluft CEA über Schutzgitter 12 in den abgeschrägten Gehäuselängsseiten aus. Diese Strömungsverläufe sind in Fig. 2 mit Pfeilen stilisiert dargestellt.

Der grundlegende Aufbau der Luftbehandler-Einheit ist aus Fig. 1 (rechts) ersichtlich. Diese Luftbehandler-Einheit versorgt den zugeordneten Fahrgastraum mit konditionierter Zuluft SA. Die Zuluft SA wird entsprechend den konkreten Betriebsbedingungen entweder gekühlt oder erwärmt. Um Einflüsse der Umgebung zu reduzieren, ist das Gehäuse der Klimaanlage im Bereich der Luftbehandler-Einheit allseitig thermisch isoliert.

Die Luftbehandler-Einheit umfasst als wesentliche Baugruppen einen Verdampfer 6, einen Heizer 7, mehrere Zuluftventilatoren 8 (hier drei Stück), mehrere Luftfilter 5 (hier ebenfalls drei Stück), zwei UV-Lampen 4, eine Außen-/Umluftklappe 14 sowie einen Elektroschaltkasten 3. Die UV-Lampen 4, die Luftfilter 5, der Verdampfer 6, der Heizer 7 und die Zuluftventilatoren 8 sind in Strömungsrichtung und bezogen auf die Längsrichtung des Gehäuses hintereinander und symmetrisch zur Mittellängsachse angeordnet.

Als Verdampfer 6 wird vorzugsweise ein Lamellenrohrwärmetauscher verwendet, der aus Kupfer-Rohren besteht, die mit Aluminium-Lamellen bestückt sind. Durch Mehrfacheinspritzung wird das Kältemittel optimal auf die Rohre des Verdampfers 6 verteilt. Der Verdampfer 6 ist in zwei versetzt einspritzende Kreisläufe geteilt. Das anfallende Kondensat wird von einer Wanne unterhalb des Verdampfers 6 aufgefangen und nach unten auf das Wagendach geleitet.

Der Heizer 7 ist als Elektroheizer ausgestaltet und erwärmt die Zuluft SA für den Fahrgastraum. Dieser Heizer 7 besteht vorzugsweise aus einzelnen Heizstäben, die in einem separaten Gehäuse montiert und verschaltet sind. Zur Vermeidung unzulässig hoher Temperaturen sind außerdem zwei Thermostate installiert. Als zusätzliche Sicherung ist ein Übertemperaturschutz vorgesehen, der bei einem eventuellen Versagen der Thermostate auslöst.

Für die Reinigung der Mischluft sind vor dem Verdampfer 6 die Luftfilter 5 installiert. Jeder dieser Luftfilter 5 besteht aus einem Filterrahmen und einer Filtermatte. Die Luftfilter 5 befreien die Mischluft (Außen-/Umluft) von eventuell auftretenden mechanischen Verunreinigungen.

Weiterhin sind für die Reinigung der Mischluft vor den Luftfiltern 5 zwei UV-Lampen 4 installiert. Diese UV-Lampen 4 befreien die Mischluft (Außen-/Umluft) und die Lamellenoberfläche des Verdampfers 6 von eventuell auftretenden bakteriellen Verunreinigungen oder verhindern präventiv deren Entstehung.

Im Bereich der Luftbehandler-Einheit ist außerdem ein Elektroschaltkasten 3 angeordnet, der bei geschlossenem Gehäusedeckel 10 über separate Wartungsöffnungen zugänglich ist. Im Elektroschaltkasten 3 sind die für den Betrieb notwendigen Schalt- und Regelgeräte installiert.

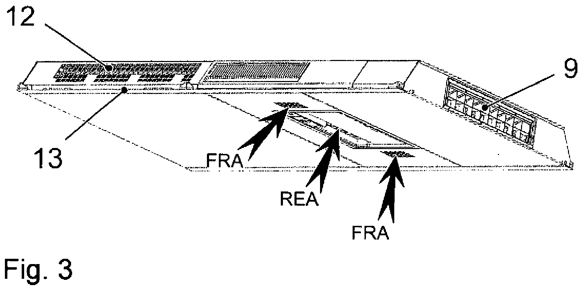

Die Strömungsverläufe an der Luftbehandler-Einheit sind in Fig. 2 und Fig. 3 mit Pfeilen stilisiert dargestellt.

Die Außenluft FRA wird über Öffnungen in den abgeschrägten Längsseiten und im Boden des Gehäuses der Klimaanlage angesaugt. Weiterhin wird die Umluft REA durch eine Öffnung im Gehäuseboden angesaugt. Zwischen den Eintrittskanälen von Außenluft FRA und Umluft REA ist eine Außen-/Umluftklappe 14 angeordnet. Mit dieser Baugruppe wird das Verhältnis von Außenluft und Umluft geregelt, so dass abhängig von der jeweils aktuellen Betriebsart der für einen optimalen Betrieb notwendige Außenluftanteil zur Verfügung steht. Die Klappenstellungen werden von einem elektrischen Stellantrieb in Abhängigkeit von der Betriebsart gesteuert und die Ansteuerung des Stellantriebes erfolgt durch den Klimaregler.

Die somit erzeugte Mischluft wird von den Zuluftventilatoren 8 über die Luftfilter 5, den Verdampfer 6 und den Elektroheizer 7 angesaugt und durch eine Öffnung 9 in der Stirnseite des Gehäuses der Klimaanlage als Zuluft SA in den Fahrgastraum gefördert.

Die Klimaanlage kann unter Beachtung der jeweils konkreten Einsatzbedingungen weiter ausgestaltet werden. So kann beispielsweise die Stabilität des gesamten Gehäuses verbessert werden, indem an den Längsseiten des Gehäuses an den unteren Kanten jeweils Versteifungselemente 13 ausgestaltet werden. Hierfür sind zum Beispiel angeschweißte Stegkonturen geeignet, die auch mit zusätzlichen Befestigungselementen für die Montage der Klimaanlage auf dem Dach des Schienenfahrzeuges ausgestattet werden können.

### Bezugszeichenliste

- 1: Verflüssiger
- 2: Verflüssigerventilator
- 3: Elektroschaltkasten
- 4: UV-Lampe
- 5: Luftfilter
- 6: Verdampfer
- 7: Heizer
- 8: Zuluftventilatoren
- 9: Austrittsöffnung Zuluft
- 10: Gehäusedeckel
- 11: Verdichter
- 12: Schutzgitter
- 13: Versteifungselement
- 14: Umluftklappe

- CEA: Verflüssigerabluft
- CSA: Verflüssigerzuluft
- FRA: Außenluft
- REA: Umluft
- SA: Zuluft

## Patentansprüche

1. Klimaanlage für Schienenfahrzeuge, bei der in einer auf dem Fahrzeugdach angeordneten Gerätewanne sämtliche für eine Klimatisierung des Fahrgastraumes notwendigen Verdichter, Verflüssiger, Lüfter, Filter, Heizelemente, Sensorik und Steuerung baulich integriert sind, wobei die mit einem Gehäuse umschlossene Gerätewanne in einem freien Bauraum auf dem Fahrzeugdach so angeordnet ist, dass sie einen Teil der Dachform innerhalb der Kontur des Schienenfahrzeuges ausbildet,
wobei in der Gerätewanne eine Verdichter-Verflüssiger-Einheit und eine Luftbehandler-Einheit installiert sind, die bezogen auf die Längsrichtung des Gehäuses der Klimaanlage hintereinander liegend angeordnet sind,
wobei die Verdichter-Verflüssiger-Einheit für zwei separate Kältekreisläufe ausgestaltet ist und hierfür zwei Verdichter (11), zwei Verflüssiger (1) und zwei Verflüssigerventilatoren (2) umfasst,
wobei die Luftbehandler-Einheit einen Verdampfer (6), einen Heizer (7), mindestens einen Zuluftventilator (8), mindestens einen Luftfilter (5) und eine Außen-/Umluftklappe (14) umfasst,
wobei die Außenluft (FRA) über Öffnungen an den Längsseiten sowie die Umluft (REA) über mindestens eine Öffnung im Boden des Gehäuses angesaugt wird,
wobei im Strömungsweg von Außenluft (FRA) und Umluft (REA) eine Baugruppe zur Regelung des Verhältnisses von Außenluft (FRA) und Umluft (REA) angeordnet ist und wobei die derart geregelte Mischluft vom Zuluftventilator (8) über den Luftfilter (5), den Verdampfer (6) und den Heizer (7) angesaugt und durch eine Öffnung (9) an der Stirnseite des Gehäuses als Zuluft (SA) in den Fahrgastraum gefördert wird,
**dadurch gekennzeichnet,**
**dass** die Verflüssigerzuluft (CSA) über Öffnungen an der Oberseite des Gehäuses von den Verflüssigerventilatoren (2) angesaugt wird, über die Verflüssiger (1) geleitet wird und als Verflüssigerabluft (CEA) über Schutzgitter (12) an den Längsseiten des Gehäuses ausströmt und dass die Außenluft (FRA) zusätzlich über Öffnungen im Boden des Gehäuses angesaugt wird.

2. Klimaanlage nach Anspruch 1, **dadurch gekennzeichnet,**
**dass** die Ventilatoren (2) der Verdichter-Verflüssiger-Einheit bezogen auf die Längsrichtung des Gehäuses hintereinander auf der Mittellängsachse und die beiden Verdichter (11) und Verflüssiger (1) jeweils symmetrisch zur Mittellängsachse angeordnet sind.

3. Klimaanlage nach Anspruch 1, **dadurch gekennzeichnet,**
**dass** das Gehäuse der Klimaanlage im Bereich der Luftbehandler-Einheit allseitig thermisch isoliert ausgestaltet ist.

4. Klimaanlage nach Anspruch 1, **dadurch gekennzeichnet,**
**dass** Luftfilter (5), Verdampfer (6), Heizer (7) und Zuluftventilator (8) der Luftbehandler-Einheit in Strömungsrichtung und bezogen auf die Längsrichtung des Gehäuses hintereinander und symmetrisch zur Mittellängsachse angeordnet sind.

5. Klimaanlage nach Anspruch 1, **dadurch gekennzeichnet,**
**dass** die Luftbehandler-Einheit jeweils drei Zuluftventilatoren (8) und Luftfilter (5) aufweist.

6. Klimaanlage nach Anspruch 1, **dadurch gekennzeichnet,**
**dass** die Luftbehandler-Einheit mindestens eine UV-Lampe (4) umfasst.

7. Klimaanlage nach Anspruch 1, **dadurch gekennzeichnet,**
**dass** im Bereich der Luftbehandler-Einheit ein Elektroschaltkasten (3) mit allen für den Betrieb notwendigen Schalt- und Regelgeräten integriert ist.

8. Klimaanlage nach Anspruch 7, **dadurch gekennzeichnet,**
**dass** der Elektroschaltkasten (3) über separate Wartungsöffnungen im Gehäusedeckel (10) zugänglich ist.

9. Klimaanlage nach Anspruch 1, **dadurch gekennzeichnet,**
**dass** die Längsseiten des Gehäuses der Klimaanlage ausgehend von ihrer unteren Kante nach oben innen abgeschrägt ausgestaltet sind.

10. Klimaanlage nach Anspruch 1, **dadurch gekennzeichnet,**
**dass** die Längsseiten des Gehäuses der Klimaanlage an ihrer unteren Kante jeweils mit Versteifungselementen (13) ausgestaltet sind.

## Claims

1. An air conditioning system for rail vehicles in which all compressors, condensers, fans, filters, heating elements, sensing and control devices needed for air conditioning the passenger space are structurally integrated in an equipment tray arranged on the vehicle roof,
wherein the equipment tray, which is enclosed by a housing, is arranged in a free installation space on the vehicle roof such that it forms a part of the roof shape within the contour of the rail vehicle,
wherein a compressor/condenser unit and an air treatment unit are installed in the equipment tray, which units are arranged one behind the other relative to the longitudinal extension of the housing,
wherein the compressor/condenser unit is designed for two separate cooling circuits and for this purpose includes two compressors (11), two condensers (1), and two condenser fans (2), wherein the air treatment unit includes an evaporator (6), a heater (7), at least one supply air fan (8), at least one air filter (5), and a fresh air/recirculating air flap (14),
wherein the fresh air (FRA) is suctioned in via openings on the longitudinal sides and the recirculating air (REA) is suctioned in via at least one opening in the bottom of the housing, wherein an assembly for closed-loop controlling the ratio of fresh air (FRA) and recirculating air (REA) is arranged in the flow path of fresh air (FRA) and recirculating air (REA),
wherein the mixed air controlled in this manner is suctioned in by the supply air fan (8) via the air filter (5), the evaporator (6), and the heater (7) and delivered as supply air (SA) into the passenger space through an opening (9) on the front face of the housing,
**characterized in that**
the condenser supply air (CSA) is suctioned in by condenser fans (2) via openings on the top side of the housing, is conducted via the condensers (1) and flows out as condenser exhaust air (CEA) via protective gratings (12) on the longitudinal sides of the housing and **in that** the fresh air (FRA) is additionally suctioned in via openings in the bottom of the housing.

2. The air conditioning system according to claim 1, **characterized in that**
the fans (2) of the compressor/condenser unit are arranged one behind the other on the central longitudinal axis relative to the longitudinal extension of the housing and the two compressors (11) and condensers (1) are each arranged symmetrically to the central longitudinal axis.

3. The air conditioning system according to claim 1, **characterized in that**
the housing of the air conditioning system is thermally insulated on all sides in the area of the air treatment unit.

4. The air conditioning system according to claim 1, **characterized in that**
air filter (5), evaporator (6), heater (7), and supply air fan (8) of the air treatment unit are arranged in the direction of flow and one behind the other relative to the longitudinal extension of the housing and symmetrical to the central longitudinal axis.

5. The air conditioning system according to claim 1, **characterized in that**
the air treatment unit comprises three supply air fans (8) and three air filters (5).

6. The air conditioning system according to claim 1, **characterized in that**
the air treatment unit includes at least one UV lamp (4).

7. The air conditioning system according to claim 1, **characterized in that**
an electric control box (3) with all switching and control devices required for operation is integrated in the area of the air treatment unit.

8. The air conditioning system according to claim 7, **characterized in that**
the electric control box (3) is accessible via separate wall openings in the housing cover (10).

9. The air conditioning system according to claim 1, **characterized in that**
the longitudinal sides of the housing of the air conditioning system are upwardly and inwardly tapering, starting from their bottom edges.

10. The air conditioning system according to claim 1, **characterized in that**
the longitudinal sides of the housing of the air conditioning system are each configured with stiffening elements (13) at their bottom edge.

## Revendications

1. Système de climatisation pour véhicules ferroviaires dont l'ensemble des composants nécessaires à la climatisation du compartiment voyageurs, tels que compresseurs, condenseurs, ventilateurs, filtres, éléments chauffants, capteurs et commande, sont intégrés par construction dans un coffre fixé sur le toit du véhicule,
où ledit coffre est renfermé par un boîtier et disposé dans un libre espace d'installation sur le toit du véhicule, de telle sorte qu'il constitue une partie de la forme de toit et donc aussi des contours du véhicule ferroviaire,
où une unité compresseur-condenseur et une unité de traitement d'air sont installées dans ce coffre, celles-ci étant disposées, par rapport au sens longitudinal du boîtier du système de climatisation, l'une derrière l'autre,
où l'unité compresseur-condenseur est conçue pour deux circuits de réfrigération séparés, ce qui fait qu'elle comprenne deux compresseurs (11), deux condenseurs (1) et deux ventilateurs de condensation (2),
où l'unité de traitement d'air est composée d'un évaporateur (6), d'un élément de chauffage (7), d'au moins un ventilateur d'amenée d'air neuf (8), d'au moins un filtre à air (5) et d'un clapet d'air extérieur/air recyclé (14),
où l'air extérieur (FRA) est aspiré à travers des ouvertures situées sur les côtés longitudinaux, tandis que l'air recyclé (REA) est aspiré à travers au moins une ouverture située dans le fond du boîtier,
où est disposé un module dans le trajet de courant de l'air extérieur (FRA) et de l'air recyclé (REA), ceci pour réguler le rapport entre l'air extérieur (FRA) et l'air recyclé (REA), et
où l'air mélangé ainsi régulé est aspiré, en passant par le filtre à air (5), l'évaporateur (6) et l'élément de chauffage (7), par le ventilateur d'amenée d'air neuf (8), avant d'être transporté vers le compartiment voyageurs comme air entrant (SA) à travers une ouverture (9) située sur le côté frontal du boîtier,
**caractérisé en ce**
**que** l'air entrant du condenseur (CSA) est aspiré par les ventilateurs de condensation (2) et à travers des ouvertures situées sur le dessus du boîtier, avant d'être conduit par-dessus les condenseurs (1) et sorti comme air évacué du condenseur (CEA) à travers les grilles de protection (12) montées sur les côtes longitudinaux du boîtier, et qu'en outre, l'air extérieur (FRA) est aspiré à travers des ouvertures situées dans le fond du boîtier.

2. Système de climatisation suivant la revendication 1, **caractérisé en ce**
**que** les ventilateurs (2) de l'unité compresseur-condenseur sont disposés, par rapport au sens longitudinal du boîtier, l'un derrière l'autre sur l'axe longitudinal central, et que chacun des deux compresseurs (11) et condenseurs (1) sont disposés symétriquement par rapport à l'axe longitudinal central.

3. Système de climatisation suivant la revendication 1, **caractérisé en ce**
**qu'**au niveau de l'unité de traitement d'air, le boîtier du système de climatisation est entièrement revêtu d'une isolation thermique.

4. Système de climatisation suivant la revendication 1, **caractérisé en ce**
**que** le filtre à air (5), l'évaporateur (6), l'élément de chauffage (7) et le ventilateur d'amenée d'air neuf (8) de l'unité de traitement d'air sont disposés, par rapport au sens longitudinal du boîtier, l'un derrière l'autre et symétriquement par rapport à l'axe longitudinal central.

5. Système de climatisation suivant la revendication 1, **caractérisé en ce**
**que** chacune des unités de traitement d'air est dotée de trois ventilateurs d'amenée d'air neuf (8) et de filtres à air (5).

6. Système de climatisation suivant la revendication 1, **caractérisé en ce**
**que** l'unité de traitement d'air comprend au moins une lampe UV (4).

7. Système de climatisation suivant la revendication 1, **caractérisé en ce**
**qu'**un coffret électrique (3) avec tous les appareils de commutation et de réglage nécessaires au fonctionnement est incorporé au niveau de l'unité de traitement d'air.

8. Système de climatisation suivant la revendication 7, **caractérisé en ce**
**que** le coffret électrique (3) est accessible à travers des ouvertures d'entretien séparées situées dans le couvercle du boîtier (10).

9. Système de climatisation suivant la revendication 1, **caractérisé en ce**
**que** les côtés longitudinaux du boîtier du système de climatisation sont conçus, à partir de leur bord inférieur et vers le haut intérieur, en forme biseautée.

10. Système de climatisation suivant la revendication 1, **caractérisé en ce**
**qu'**au niveau de leur bord inférieur, chacun des côtés longitudinaux du boîtier du système de climatisation est doté d'éléments de renforcement (13).
